**Europäisches Patentamt**

(19) **European Patent Office**

**Office européen des brevets**

(11) Publication number: **0 052 713**
**B1**

(12) **EUROPEAN PATENT SPECIFICATION**

(45) Date of publication of patent specification: **27.04.88**

(51) Int. Cl.⁴: **G 06 F 9/46,** G 06 F 15/20

(21) Application number: **81107587.8**

(22) Date of filing: **23.09.81**

(54) **A process management system for scheduling work requests in a data processing system**

(30) Priority: **20.11.80 US 208621**

(43) Date of publication of application:
**02.06.82 Bulletin 82/22**

(45) Publication of the grant of the patent:
**27.04.88 Bulletin 88/17**

(84) Designated Contracting States:
**DE FR GB IT**

(56) References cited:
**IBM TECHNICAL DISCLOSURE BULLETIN, vol.
21, no. 9, February 1979, pages 3501-3504, New
York, US T.L.ADAM et al.: "Integrated
operating system"**
**IBM TECHNICAL DISCLOSURE BULLETIN, vol.
15, no. 7, December 1972, pages 2202-2203,
New York, US T.R. EDEL: "Transparent task
activation/deactivation control by other
problem program tasks"**

(73) Proprietor: **International Business Machines
Corporation
Old Orchard Road
Armonk, N.Y. 10504 (US)**

(72) Inventor: **Herrington, Kenneth Milton
9415 Spring Hollow Drive
Austin, Texas 78750 (US)**
Inventor: **Jeffries, Kenneth Layton
8507 Appalachian Drive
Austin, Texas 78759 (US)**

(74) Representative: **Bonin, Jean-Jacques
Compagnie IBM France Département de
Propriété Intellectuelle
F-06610 La Gaude (FR)**

(56) References cited:
**INSTITUTE OF ELECTRICAL AND
ELECTRONICS ENGINEERS, International
Switching Symposium Record, Cambridge,
Mass., June 6-9, 1972, pages 525-529, New
York, US D.M. ENGLAND: " Operating system
of system 250"**

Courier Press, Leamington Spa, England.

## Description

This invention relates to a process management system for scheduling work requests to be asynchronously executed by an electronic digital processor of a text processing system in a real time environment. In particular, it pertains to a process management system for scheduling the execution of predefined sequences of instructions in an electronic digital processor by software processes to reduce the execution time and memory size requirements.

Many electronic digital processing systems have been previously developed where a predefined sequence of instructions are executed by a software process in response to an external event. These processing systems function in a real time environment and are dynamic in that there is a limited control over previous events. The execution of this predefined sequence of instructions or work requests are scheduled for execution in the order of their priority in the system.

Existing data processing systems may operate in a real time environment to schedule the execution of predefined sequences of instruction or work requests by the creation and deletion of a process for each work request. These data processing systems utilize a set of separate or distinct functions in order to schedule the individual work requests in accordance with the priorities assigned to these work requests. A scheduling mechanism for such systems with such separate or distinct functions requires the creation and deletion of a process for each work request. Such scheduling mechanisms require additional memory capability to implement such a system and slow down the operation of the system. A need has thus arisen for a system to schedule work requests in a digital processing system operation in a real time environment which would reduce memory requirements and processing time associated with existing work request scheduling systems.

IBM Technical Disclosure Bulletin, Volume 21, No. 9, February 1979, pages 3501—3504 discloses a process dispatcher mechanism "which assigns the system interrupt levels in a prioritized fashion". A process system can migrate through the following allowed process states:
— Pending Process state
— Ready Process state
— Blocked Process state and
— Run Process state

Each process migrates from one state to another according to its priority and the availability of the required shared system resources. Therefore processes can be carried out asynchronously with respect to the work requests. However in this mechanism, the routines that execute the individual work request and the process dispatcher are centralized since a unique function unit, the "Scheduler Process", which is assigned the highest priority interrupt level controls all operations and is systematically involved in executing the routing that executes the individual Work Requests.

The work request scheduling arrangement of the present invention as claimed combines a priority queueing scheme with a task or process supervisor and program selection routine into one central operating system function. This central operating system for scheduling work requests to independent tasks or processes is an integral part of a digital processing system such as a text processing system.

The process management system of the invention separates the processes from the routines that execute the individual work request, eliminating the necessity of creating and deleting a process for each individual work request. The elimination of the creation and deletion of a process for each work request reduces the execution time and memory size requirements of the system.

The system is responsible for creating processes, terminating processes and controlling the execution of processes, as well as providing a mechanism to serialize or synchronize the execution of two or more processes. Each process is associated with one or more queues of work requests, and a process executes work requests only from its queues. Each work request queue associated with a process has an implied priority which causes the process to execute all work requests from the first queue before selecting a work request from the next queue. Multiple processes may also be associated with the same queue of work requests, and the process which becomes available first will select the highest priority work request on that queue.

A process may schedule work requests to any queue, including its own. Once a process has selected a work request for execution, it will complete the execution in that work request before selecting another work request. The process runs asynchronously to all other processes.

A process may be "held" to prevent it from executing additional work requests until such time as it has been "released". In addition, a work request queue may be "held" to prevent any process associated with that queue from executing work requests on that queue until such time it is "released".

Once a process selects a work request, the routine specified in that work request will be called to process the work request, passing it as specified parameters. Upon completion of the specified routine the process will signal the originating process of the completion of the work request with a return code. The process will then search the next work request to be processed in accordance with the priority assigned to these work requests.

The work request scheduling arrangement of the present invention separates the external events occurring in a real time environment from the processing of a predefined sequence of instructions responsive to that event by scheduling the work requests to be executed at a later time, or even deleted if later requested. Thus it requires less memory in the system with improved demand response time performance for an efficient and flexible system.

For a more complete understanding of the present invention and further objects and advantages thereof, reference is now made to the following detailed description taken in conjunction with the accompanying drawings in which:

Figure 1 is a block diagram of a text processing system utilizing the present invention.

Figure 2 is a block diagram of the processor illustrated in figure 1.

Figure 3 is a block diagram that illustrates the interaction between the software processes and hardware interrupts of the text processing system of figure 1.

Figure 4 is a block diagram of the interaction of the keyboard interrupt service routine with a process.

Figure 5 is a block diagram that illustrates the service routines of the processor of figure 1 interfaced with the application programs and processes.

Figure 6 illustrates multiple processes assigned to a single queue of work requests.

Figure 7 is a flow chart diagram of the LOAD/ INVOKE/DELETE routine of a process driver.

Figure 8 is a flow chart diagram of the SUSPEND service routine.

Figure 9 is a flow chart diagram of the RELEASE service routine; and

Figure 10 is a flow chart diagram of the ACALL service routine.

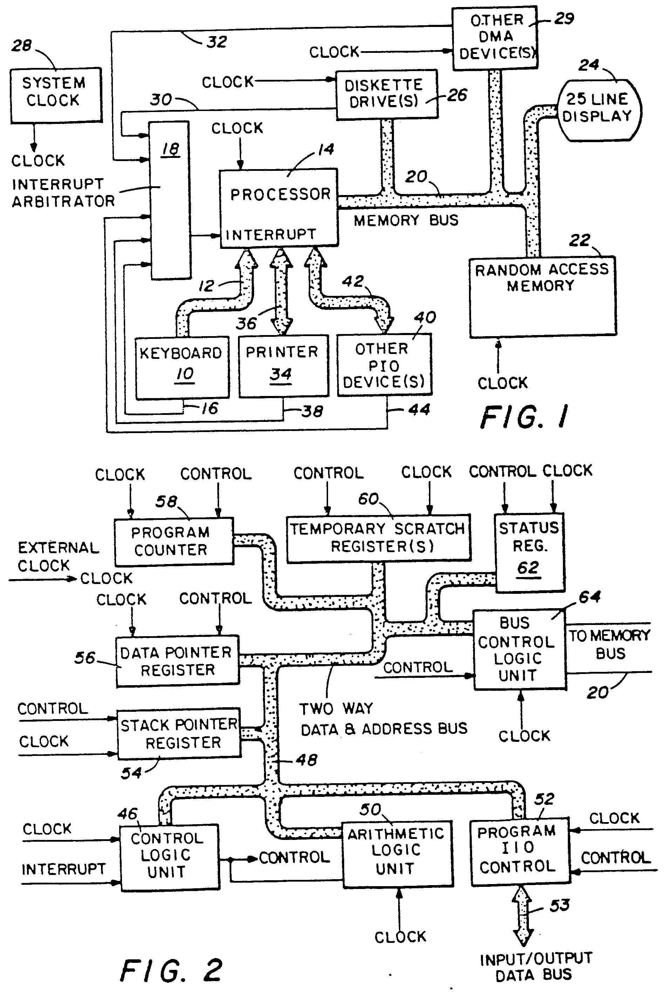

Referring to figure 1, a block diagram of a work processing system implementing the present invention is illustrated. A keyboard 10 is provided for inputting graphic characters, data and instructions to the word processing system. The graphic characters, data and instructions from the keyboard 10 are applied through a data bus 12 to an electronic digital processor 14 of the system. Processor 14 may be inplemented by a commercially available microprocessor, such as the Intel Corporation's 8086 processor. The Intel 8086 processor executes on one level with one set of registers.

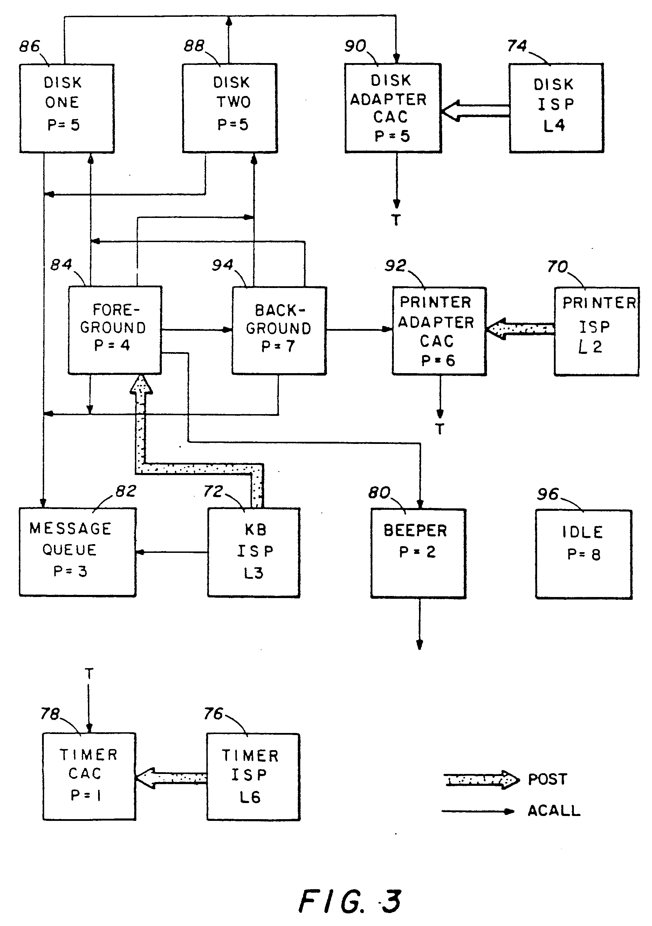

The keyboard 10 also applies a hardware interrupt signal via interrupt line 16 to an interrupt arbitrator 18. The 8259-A Interrupt Controller was selected to implement the interrupt arbitrator 18 to resolve interrupt requests from the incoming interrupt lines. The 8259-A Interrupt Controller may resolve interrupt requests from up to eight interrupt lines into eight priority levels for the 8086 processor 14. The assignment of priority levels to input lines to the input arbitrator 18 is further explained hereinbelow in connection with the description of figure 3.

The processor 14 forms the various control functions necessary for the word processing system to process, edit and display data. The processor 14 is connected by a memory bus 20 to a random access memory 22 for storing system data and programs. A visual display 24 is also connected by the memory bus 20 to the processor 14 for displaying data and information for enabling communication between the system and an operator of the system. A diskette drive 26 driven by the system clock 28 is also connected through the memory bus 20 to the processor 14. The diskette drive 26 comprises means for accessing the system programs loaded from a program library onto diskettes. Modules from the program library may be loaded or deleted from the diskettes. The word processing system may include other direct memory access "DMA" devices 29 connected via the memory bus 20 to the processor 14. The diskette drives 26 and other "DMA" devices 29 provide hardware interrupt signals on interrupt lines 30 and 32, respectively, to the interrupt arbitrator 18.

A printer 34 communicates via an output data bus 36 with the processor 14 for providing a printed record of keyboard entered data or instructions from the system. The printer 34 provides another hardware interrupt signal via interrupt signal line 38 to the interrupt arbitrator 18. Other processor input/output devices 40 may also be provided as part of the system. The processor input/output devices 40 may communicate via an output data bus 42 to the processor 14 and provide a hardware interrupt signal via interrupt signal line 44 to the interrupt arbitrator 18.

Referring now to figure 2, the processor 14 is illustrated in further detail to show the typical hardware elements found in such processors. The processor 14 includes a control logic unit 46 which receives priority interrupt signals from the interrupt arbitrator 18 of figure 1. The control logic unit 46 communicates via a two-way data and address bus 48 to the arithmetic logic unit 50, program I/O control 52, stack point register 54, data pointer register 56; program counter 58, temporary scratch registers 60, status registers 62, and bus control logic unit 64.

In response to a fetch instruction from the random access memory, the control logic unit 46 generates control signals to the other logic units of the processor, including the arithmetic logic unit 50, the program I/O control 52, the program counter 58, temporary scratch register 60 and bus control logic unit 64. Data processed in the processor 14 is input through the bus control logic unit 64 and connected to the memory bus 20. The program I/O control unit 52 is connected to the input/output data bus 53. The bus control logic unit 64 connected to the memory bus 20 receives instructions for processing data to the input/ output control 52. Synchronous operation of the control unit 46 with other logic elements of the processor 14 is achieved by means of clock pulses input to the processor from an external clock source 28 (see figure 1). Different storage sections of the random access memory 22 are identifiable for instruction storage and data storage.

Processed data from the processor 14 is output through the program input/output control 52 to the input/output data bus 52. Input data on the data bus 48 is past internally through the processor 14 to a control logic unit 46 by the arithmetic logic unit 50. The arithmetic logic unit 50, in response to a control signal from the control logic 50, in response to a control signal from the control logic unit 46 and in accordance with the instructions received on the memory bus 20, performs arithmetic computations which may be stored in the temporary scratch registers 60. Other transfers of data between the arithmetic logic unit 50 and other logic elements of the processor 14 are possible. Such additional transfers may be to the program counter 58, the data pointer register 56 or stack pointer register 54.

Also in a data stream for these various logic elements by means of the bus 48 is the status register 62. Operation of the processor 14 is determined by instructions on the memory bus 20 and input data on the input data bus 12. For example, in response to received instructions the processor 14 may transfer data stored in the scratch registers 60 to one of the registers 54, 56 or 62. Such operation of processors as detailed in figure 2 are well known to those in the data processing field more detailed description of each operation of the processor 14 is not necessary for a complete understanding of the invention as claimed.

Referring to figure 3, a process control mechanism is illustrated by the interaction of software processes and hardware interrupt service processes (ISPs). While the interrupt arbitrator 18 illustrated in figure 1 may receive only five hardware interrupt signals, the word processing system may include additional hardware interrupts. The 8259-A Interrupt Controller may accommodate interrupt lines for up to eight hardware levels, each hardware interrupt having assigned to it a priority code. Interrupt Service Processes correspond to each of the hardware interrupts and are dispatched by the system to service that interrupt. While the ISP is dispatched, interrupts at the same or higher priority level are masked out thus ensuring proper scheduling of the processor 14 for interrupt servicing.

Figure 3 illustrates four hardware interrupt service processes: the printer interrupt service process 70 (level 2), the keyboard service process 72 (level 3), the disk interrupt service process 74 (level 4), and the timer interrupt service process (level 6). The other processor input/output devices 40 and other "DMA" devices 29 of the word processor system of figure 1 are not included in figure 3 but are understood to be additional hardware interrupts which may be included in the word processing system. The timer interrupt service process 76, is part of the timer management of the overall system control program and is responsible for providing an interval timing service. A low level represents a high priority, thus for the hardware ISP as illustrated in figure 3, the printer has the highest priority of the illustrated ISPs, being assigned hardware priority level 2. The four hardware interrupt service processes 70, 72, 74 and 76 illustrated communicate via the POST macro instruction to the processes of the process control system. The POST macro instruction is used to signal the completion of an event.

The processes of the system control program are given a "software" priority, which has a lower priority than a hardware interrupt priority, to control the dispatching order among these processes. The processes illustrated in figure 3 are examples of the software processes and their software priorities. In order of their priority, figure 3 illustrates the following processes: the timer CAC process 78 (priority one), the beeper process 80 (priority two), the message queue process 82 (priority three), the foreground process 84 (priority four), disk one process 86 (priority five), disk two process 88 (priority five), disk adapter CAC process 90 (priority five), printer adapter CAC process 92 (priority six), background process 94 (priority seven) and idle process 96 (priority eight).

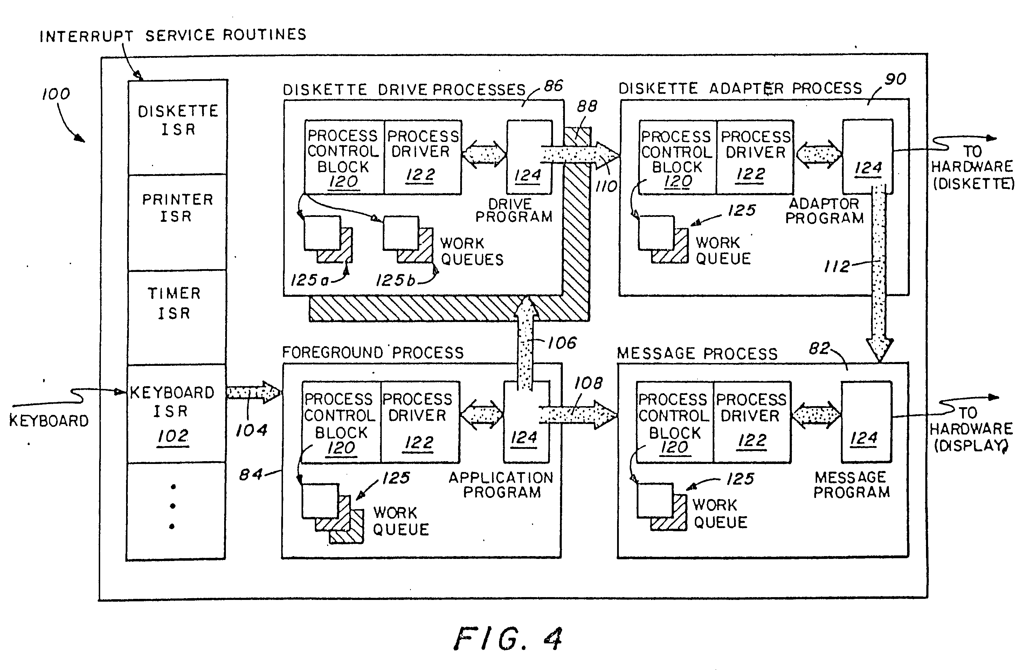

Referring to figure 4, interrupt service routines 100 corresponding to their hardware interrupts are illustrated in interaction with processes of the system. The keyboard interrupt service routine 102 interacts through a POST macro instruction 104 to the foreground process 84. The foreground process 84 interacts with the diskette drive processes 86 and 88 through an ACALL macro instruction 106 and to the message queue process 82 through an ACALL macro instruction 108. The diskette drive processes 86 and 88 communicate through ACALL macro instructions 110 to the diskette adapter process 90, which in turn communicates through an ACALL macro instruction 112 to the message queue process 82.

The process management system of the present invention illustrated by way of example in figure 4 is one of the four areas of the system control program of the word processing system illustrated in figure 1. The other functional areas of the system control program are the time management, program management and storage management.

The process management consists of a collection of service and supervisory routines responsible for initializing processes, terminating processes and controlling the execution of processes as well as providing mechanisms to synchronize or serialize execution between two or more processes. The scheduling mechanism of the process management function of the system control program for the word processing system illustrated in figure 1 is described herein. Time management functions to provide an interval timing service. Program management functions to load modules from a program library onto a diskette of the word processing system, deleting modules and establishing linkages for communication. Storage management functions to allocate and deallocate storage. A more detailed description of the operation of the time, program and storage management functions is not necessary for a complete understanding of the invention as claimed.

A process is defined as a functional unit consisting of a process control block 120, a process driver 122 and an ACALLed program 124 to be executed. As illustrated in figure 3 and described above each process must be assigned a unique process ID (PID). The process is the dispatchable entity in the scheduling mechanism of the process management. In dispatching a process, the ACALLed program (or a routine synchronously called by the primary program) will be in execution. A program 124 associated with one process is executed asynchronously to the program associated with any other process. The process with the highest dispatching priority (and eligible for execution) is the process that will be dispatched by the scheduling mechanism. At least one work request queue 125 is associated with each process. When the process's execution is interrupted by an asynchronous event or an explicit request, the state of the process, the contents of its registers, the instruction pointers, etc., are saved so that when the process is redispatched, this information can be restored and the process can resume execution.

A process may be in any one of four possible states: unloaded, waiting, ready, and running. An unloaded process is one that has been defined by an off-line procedure but has not yet been loaded. A waiting process is one that has been loaded but is not presently eligible to be dispatched, either because there is no outstanding work request, or it is waiting for the completion of an event, or waiting for a resource to be released. A ready process is one that has been loaded and is eligible to be dispatched but is not currently the highest priority process in the ready state. The running process is the one that has been loaded, eligible to be dispatched and is currently the highest priority process in the ready state.

The process control block 120 of a process is the central repository of information about that process. It contains the current status of the process, serves as an anchor block for the queue of work requests, and is the primary focal point for communication with other processes.

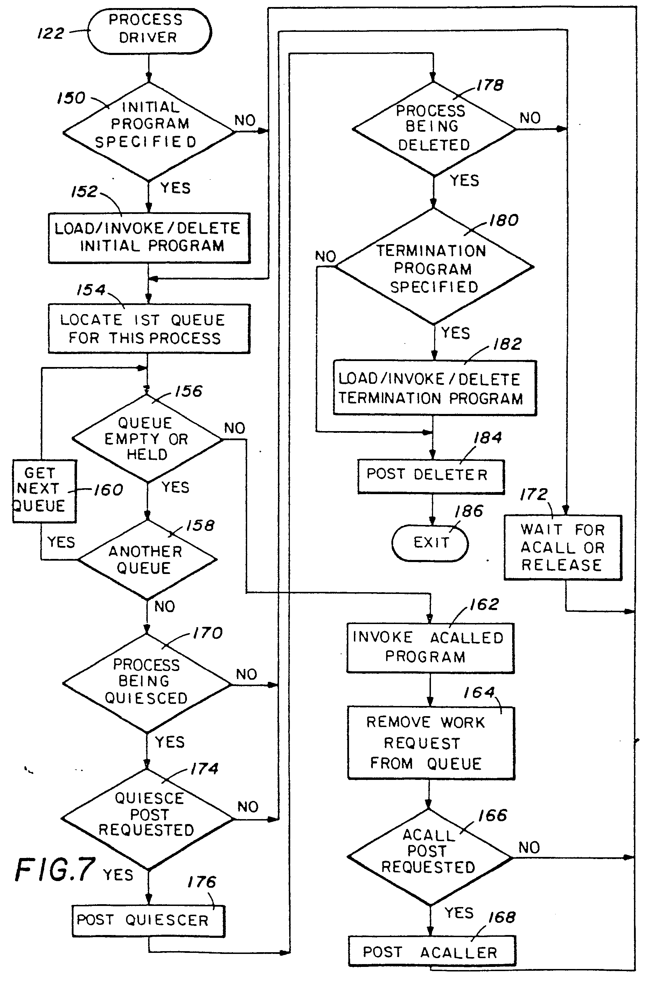

The process driver 122 loads the initialization routine for a process (if any) and executes it synchronously. When the initialization routine returns control to the process driver 122, the initialization routine is deleted, and the process is ready to begin executing work requests. The initialization routine for a process driver 122 is illustrated in figure 7 and described in further detail below.

When work requests are queued to a process, that process driver functions to select the first or highest priority work request from the queue and call the program specified on that work request as set forth on the ACALL request. When the ACALLed program returns, the return code is placed in the event controlled block specified on the ACALL macro that initiated the work request.

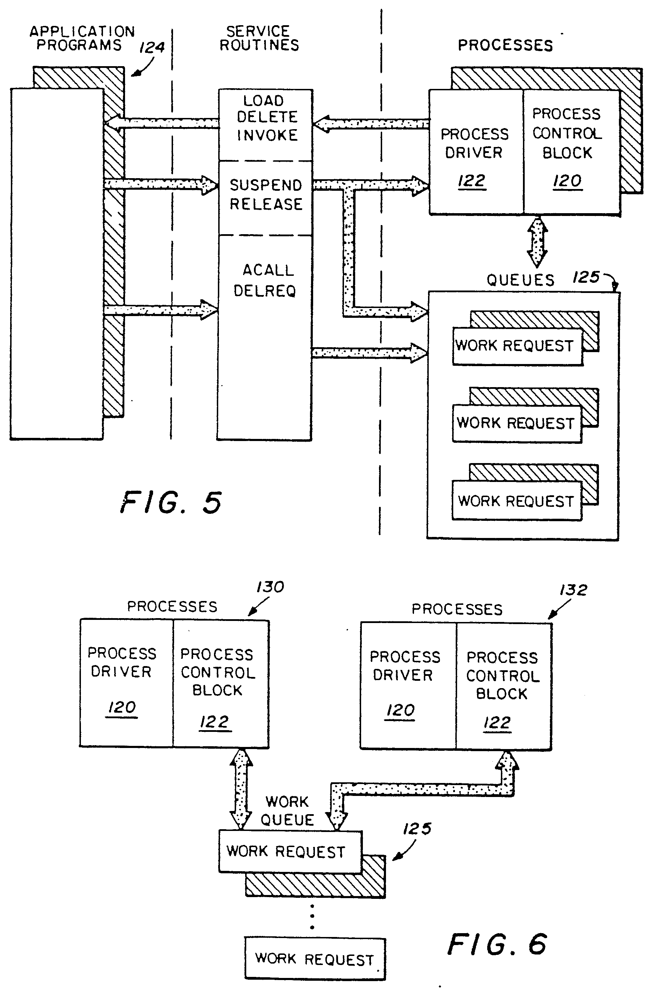

After a process has been loaded, an ACALL macro instruction may be used to request one complete execution of the program associated with the specified work request. (While the process illustrated by way of example in figure 4 show a program associated with a process, a process driver 122 may INVOKE any program as illustrated in figures 6 and 7 and described hereinbelow). The work request will be queued to a work request queue 125 and executed asynchronously to the process issuing the ACALL. The ACALL service routine locates the process control block 120 of the specified process. The parameters specified in the ACALL macro are moved into a control block 120, and the control block 120 is then queued to the chain of active work requests according to the ACALL priority value specified. New work requests will be queued after work requests with equal or higher ACALL priority values. If the ACALLed process is dormant and its work request queue 125 is not being held, the ACALLed process is added to the ready list. The ACALL priority value does not affect the dispatching priority of the ACALLed process.

Figure 4 illustrates a single work queue 125 associated with each of the process control blocks 120 of the foreground process 84, message process 82 and diskette adapter process 90. The diskette drive processes 86 and 88 illustrate multiple work queues 125A and 125B associated with the process control block 120 of those processes.

Figure 5 illustrates a single work queue 125 that is associated with multiple processes 130 and 132 in which the process which first becomes available will select the highest priority work request on that queue 125.

Figure 6 illustrates the interaction of the scheduling mechanism's service routines with the application programs 124 and the system processes. LOAD, DELETE and INVOKE service routines function to load the ACALLed programs after a stack and process control block has been created for the process. The loading of a process may be done by the Load List Processor during system initialization or may be loaded dynamically in response to a load processor macro instruction at any time after system initialization.

Management of the processes is accomplished by use of the SUSPEND and RELEASE macro instructions. A SUSPEND macro instruction is used to control the queue of work request 125 for a specified process. A work request in progress cannot be cancelled or suspended by the control program. The HOLD option of SUSPEND is used to prevent the specified process from accessing the work request queue 125. Once the process has been completed, execution of the work request in progress at the time of the HOLD will be placed in a wait state until a RELEASE macro instruction is issued for the process. Additional work requests may be queued to a process that is being held.

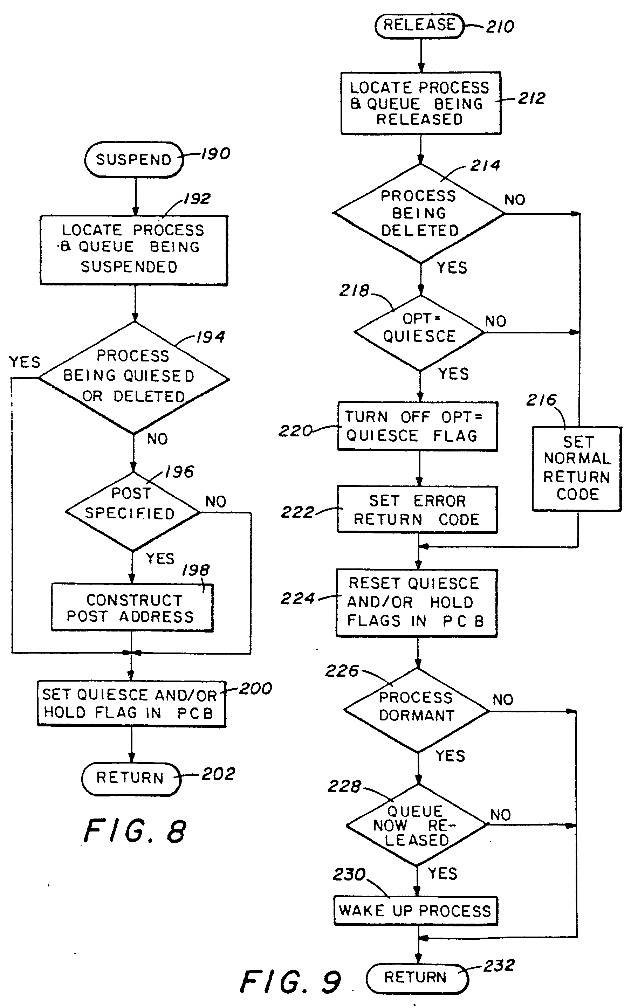

The QUIESCE option of SUSPEND is used to prevent additional work requests from being queued to a process and being quiesced until a RELEASE with QUIESCE option macro instruction is used by a process. The process will be allowed to execute this work request queued to that process prior to the receipt of the SUSPEND with QUIESCE option instruction. The process issuing the SUSPEND instruction may request notification when the target process goes dormant. It is possible by use of the SUSPEND macro with the HOLD and QUIESCE instruction to HOLD and QUIESCE a process. The SUSPEND service routine is illustrated in figure 8 and described further hereinbelow.

The RELEASE macro instruction is used to release control of the work request queue for a specified process that had been previously SUSPENDED. The HOLD option of RELEASE is used to allow the process to resume executing queued work requests and the QUIESCE option is used to allow the process to accept additional work requests. A RELEASE request will be rejected if the specified process is being deleted. The release service routine is set forth in the flow chart illustrated in figure 9 and described hereinbelow.

The scheduling of queues assigned to a process is managed by use of ACALL and DELREQ macro instructions. The ACALL macro instructions is used to request one complete execution of the predefined set of instructions associated with the specified process in the process control block 120. The work request will be executed asynchronously to the process issuing the ACALL. The control program for the process control block may issue a POST instruction to the calling program when the process has completed execution of that particular work request.

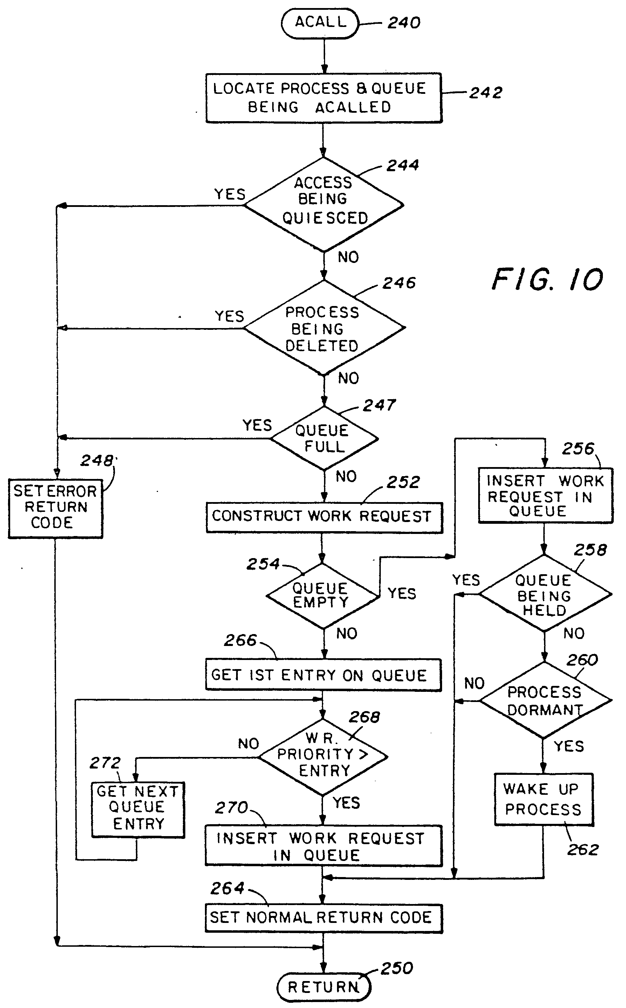

The DELREQ macro instruction is used to delete a work request previously queued to the specified process via an ACALL macro instruction. A work request already in progress cannot be deleted by the control program. However, when a DELREQ macro instruction is issued for an active work request, a flag in the status field of the process control block 120 will be set. The application program 124 may by convention sample the status field and, if the delete work request flag is set, terminate processing in that work request. The ACALL service routine is illustrated in the flow chart in Figure 10 and described hereinbelow.

Referring to figure 7, the LOAD, DELETE and INVOKE service routines for the process driver 122 are presented. After a load process software interrupt or load list has created a stack and process control block 120 for the process, the process driver 122 signals the request block 150 to determine if an initial program has been specified. If an initial program has been specified, the routine advances to the LOAD/INVOKE.DELETE initial program instruction 152. If the initial program is not specified, the routine branches around the instruction 152 to the next instruction 154 to locate the first queue for this process.

The routine advances to request 156 to determine if the queue is empty of held, and if the answer is "yes" the routine advances to the request 158 to determine if there is another queue. If there is another queue, the routine branches under instruction 160 to get the next queue and returns the routine to the request 156.

If the routine determines that the queue is not empty or held, it branches to instruction 162 to invoke the ACALLed program and then instruction 164 instructs the process driver 122 to remove the work request from the queue for processing. The routine advances to a request 166 to determine if a POST was requested on the ACALL. If it has been requested, the routine proceeds to instruction block 168 to POST the ACALLer and returns to the instruction 154 to locate the first queue for this process. If the request 166 determines that no ACALLed POST has been requested, it returns also the same instruction 156 in the routine.

The service routine continues to advance in the manner previously described through the request 156 and request 158, and upon a determination at request 158 that there are no additional queues for this process, request 170 determines if the process is being quiesced. When the process is not being quiesced the routine branches to the instruction 172 to wait for ACALL or RELEASE. Following this the routine is returned to the instruction 154.

If the request 170 determines that the process is being quiesced, a request 174 determines if a QUIESCE POST is requested. If it is not, the routine branches to the instruction 172 described above, but if a QUIESCE POST is requested the program advances to the instruction 176 to POST Quiescer. Following completion of instruction 176, the routine request 178 determines if the process is being deleted. If it is not, then the routine branches to the WAIT instruction 172 described above. If the process is being deleted, the program advances to the request 180 to determine if a termination program is specified. If it is specified the routine advances to the instruction 182 to implement the LOAD/INVOKE/DELETE termination program. Upon completion of the termination program or determination at request 170 that no termination program has been specified, the routine advances to the instruction 184 to POST Deleter and upon the execution of this instruction the routine executes an exit instruction 186.

Referring to figure 8, the flow chart for the SUSPEND service routine is illustrated. A SUSPEND macro instruction 190 instructs the routine to advance to the instruction 192 to cause the routine to locate the process or queue being suspended. The SUSPEND service routine then advances to the request 190 in order to determine if the process is being quiesced or deleted. If it is not being quiesced or deleted, the program advances to request 196 to determine if POST is specified. If it has been specified, the routine advances to the instruction 198 to construct a post address. If it has not the routine branches instead to the instruction 200 to set a quiesce and/or hold flag in the process control block 120 of the process. If the request 194 determines that the process is being quiesced or held, the routine also branches to the instruction 200. Upon execution of the instruction 200 by the service routine, execution of the return instruction 202 returns the control back to the control program.

Referring now to figure 9, the RELEASE service routine flow chart is set forth. A release instruction 210 causes the routine to advance to the instruction 212 to locate the process and queue being released. Upon location of the processing queue being released, request 214 returns to the process as being deleted, and if it is not the routine branches to the instruction 216 to set the normal return code. However, if the process is being deleted, the service routine advances to the request 218 to determine if the routine includes the option to QUIESCE or HOLD or both. If the QUIESCE or QUIESCE and HOLD option is selected, the routine executes instruction 220 to turn off the QUIESCE option flag upon completion of this instruction 222 which causes the routine to set the return code. Upon the execution of instruction 222 or 216 the routine advances to the instruction 224 to reset the QUIESCE and/or HOLD flags in the process control block 120. The routine then enters request 226 to determine if the process is dormant, and if it is the routine advances to request 228 to determine if the queue has now been released. If the queue has been released, the routine advances to instruction 230 to wake up the process and end the routine by executing a return command 232. If the process is not dormant or if the queue has not been released, the routine also branches to the return command 232 to end the release service return.

Referring to figure 10, the ACALL service routine is set forth in a flow chart arrangement. An ACALL instruction 240 advances the routine to the first instruction 242 to locate the process and queue being ACALLed. The routine enters the request 244 to determine if the process is being quiesced, and if it is not, the request 246 determines if the process is being deleted. If the process is not being deleted, the routine advances to request 247 to determine if the queue is full. If the process is being quiesced, or the process is being deleted, or the queue is full; the routine branches to the instruction 248 to set a zero return code and branches from there to the return command 250 to end the ACALL service routine.

If the queue is not full, the ACALL service routine causes the instruction 252 to be executed to construct a work request. The service routine then advances to the request 254 to determine if the queue is empty. If the queue is empty, the routine branches to a subroutine beginning with an instruction 256 to insert a work request in the queue. Upon completion of the instruction 256, the routine advances to request 258 to determine if the queue is being held. If it is not, it advances to the request 260 to determine if the process is dormant. If it is dormant it executes the wake up process instruction 262. If the queue is being held or if the process is not dormant, the subroutine branches past the instruction 262 to instruction 264 to set a normal return code and advances to execute the return command 250 to end the ACALL service routine.

If the request 254 determines that the queue is not empty the routine advances to the instruction 266 to get the first entry on the queue. The routine then advances to comparison 268 to determine if the work request priority is greater than that of the previously queued work request. If it is the routine advances to the instruction 270 to insert a work request in the queue and upon completion of that instruction advances to set a normal return code in instruction 264 and finally executes a return command 250 to end the service routine. If the compare 268 determines that the work request priority is not greater than the entry, the routine branches to an instruction 272 to cause the routine to get the next queue entry and repeat the comparison at 268 to determine if the work request priority is greater than the entry.

In operation the process driver 122 loads the initialization routine for a process and executes it synchronously. Upon return of control to the process driver, the initialization routine is deleted and the process is ready to begin executing work requests through the ACALL service routine.

The system control program directs the dispatchment of the processes in the order of the dispatching priority of the process relative to other processes in the system. The process with the highest dispatching priority is the process that will be dispatched. If there are no queued work requests, the highest priority process driver drops into a WAIT state and the next lower priority process is dispatched.

Once a process has been loaded, programs and other processes can request that process be executed by issuing an asynchronous CALL (ACALL) macro instruction. This is the system mechanism used to permit a process to schedule work to be done, asynchronously, by another process. Multiple work requests may be scheduled to the queue for a given process by one or more processes, and each work request is queued according to the priority specified in the ACALL macro instruction.

When work requests are queued to the dispatched process, that process driver's responsibility is to select the first work request from the queue and call the program associated with that work request. When the program returns, the ACALLing routine is posted and the process driver prepares to execute the next work request on the queue, if any.

A process execution may be interrupted by an asynchronous event or an explicit request. If this occurs, the state of the process, the contents of the registers, the instruction pointer, etc., are saved so that when the process is redispatched this information can be restored and the process can resume execution.

The QUIESCE option of the SUSPEND is used to prevent additional work requests from being queued to a specified process. The SUSPEND service routine sets a flag in the process control block 120 of the specified process so that the ACALL service routine can reject the ACALL request rather than queueing it to the specified process.

Claims

1. A process management system for performing individual processes including a data processing system operating in a real time environment comprising a processor (14), a memory (22), processor input/output devices and further including:
means for assigning a priority level to said processes
a dispatcher for determining the highest priority process that is capable of execution and for dispatching the shared system resources to said highest priority process
means for generating a priority coded interrupt signal in response to processor input/output devices and to said processes
means responsive to said priority coded interrupt signal for assigning work requests to processes
characterized in that a first process is associated with one queue (125) for queueing work requests WR scheduled according to their priority by a second process said WR corresponding to a task to be executed by said first process,
said first process has means (122) for selecting the more priority WR enqueued for executing when said dispatcher dispatches said first process
said first process has means (ACALL macro instruction) for assigning a WR to a second selected queue associated to a third process to schedule a work to be done asynchronously by said third process with a given priority,
said first process has means (122) for signalling the completion of a work corresponding to a WR.

2. A process management system according to Claim 1 characterized in that said first process is associated with a set of hierarchized queues (125), each queue having an implied priority which causes said first process to execute all work requests from the first queue before selecting a WR from the next queue.

3. A process management system according to Claim 2 further comprising:
a single queue of work requests assigned to a plurality of processes, whereby the next highest priority work request on said queue is processed by the next available one of said plurality of processes.

4. A process management system according to Claims 1, 2 or 3, further comprising:
means for holding a process from executing a next work request from the queue of work requests associated with said process; and
means for releasing a held process to allow it to continue to execute one predefined sequence of instructions for the next highest priority work request on its queue.

5. A process management system according to Claims 1, 2, 3 or 4 further comprising:
means for holding a queue to prevent a process associated with that queue from executing the next highest priority work request on that queue; and

means for releasing a held queue to allow the process associated with that queue to continue executing its primary program for the next highest work request on that queue.

Patentansprüche

1. Ein Vorgangsverwaltungssystem für die Ausführung individueller Vorgänge mit einem Datenverarbeitungssystem, das in Realzeitanordnung mit einem Prozessor (14) und einem Speicher (22) arbeitet, ferner enthaltend:
Mittel für die Zuordnung eines Prioritätsniveaus an besagte Vorgänge,
einen Verteiler, der den ausführungsfähigen Vorgang der höchsten Priorität ermittelt und die geteilten Systemmittel dem besagten Vorgang mit der höchsten Priorität zuteilt,
Mittel für die Erzeugung eines prioritätskodierten Unterbrechungssignals, ansprechend auf die Prozessor-Ein- und Ausgangsvorrichtungen und die besagten Vorgänge (Mittel, die auf das besagte prioritätskodierte Unterbrechungssignal ansprechen, um die Verarbeitungsaufforderungen den Vorgängen zuzuweisen),
dadurch gekennzeichnet, dass ein erster Vorgang einer Warteschlange (125) zugeordnet ist, um die Verarbeitungsaufforderungen WR, die durch einen zweiten Vorgang nach ihrer Priorität geordnet sind, einzureihen, wobei besagte Verarbeitungsaufforderung WR einer Aufgabe entspricht, die durch den besagten ersten Vorgang auszuführen ist,
besagter erster Vorgang über Mittel (122) für die Auswahl der vorrangigen Verarbeitungsaufforderung in der Warteschlange für die Ausführung verfügt, wenn besagter Verteiler besagten ersten Vorgang zuordnet,
besagter erster Vorgang über Mittel verfügt (Macro-Anweisung ACALL), um eine Verarbeitungsaufforderung einer zweiten ausgewählten Warteschlange zuzuordnen, die einem dritten Vorgang zugeordnet ist, um eine Arbeit für die asynchrone Ausführung durch den besagten dritten Vorgang mit einer gegebenen Priorität zu programmieren,
und besagter erster Vorgang Mittel (122) besitzt, um die Ausführung einer Arbeit, die einer Verarbeitungsaufforderung entspricht, mitzuteilen.

2. Vorgangsverwaltungssystem gemäss Anspruch 1, dadurch gekennzeichnet, dass der besagte erste Vorgang einer Reihe hierarchisch geordneter Warteschlangen (125) zugeordnet ist, wobei jede Warteschlange eine vorgegebene Priorität besitzt, welche bewirkt, dass besagter erster Vorgang alle Verarbeitungsaufforderungen von der ersten Warteschlange ausführt, bevor eine Arbeitsaufforderung von der nächsten Warteschlange ausgewählt wird.

3. Vorgangsverwaltungssystem gemäss Anspruch 2, ferner enthaltend:
eine einfache Warteschlange Verarbeitungsaufforderungen, die einer Mehrzahl von Vorgängen zugeordnet sind, wodurch die Verarbeitungsaufforderung mit der nächsthöheren Priorität in der besagten Warteschlange vom nächsten verfügbaren aus besagter Mehrzahl von Vorgängen verarbeitet wird.

4. Vorgangsverwaltungssystem gemäss Anspruch 1, 2 oder 3, ferner enthaltend:

Mittel zum Zurückhalten eines Vorgangs von der Ausführung einer nächsten Verarbeitungsaufforderung aus der Verarbeitungsaufforderungs-Warteschlange in Verbindung mit besagtem Vorgang,

und Mittel zum Freigeben eines zurückgehaltenen Vorgangs, um ihm zu gestatten, die Ausführung einer vorgegebenen Sequenz von Anweisungen für die Verarbeitungsaufforderung mit der nächsthöheren Priorität in seiner Warteschlange fortzusetzen.

5. Vorgangsverwaltungssystem gemäss Anspruch 1, 2, 3 oder 4, ferner enthaltend:

Mittel zum Zurückhalten einer Warteschlange, sodass ein Vorgang, der dieser Warteschlange zugeordnet ist, die Verarbeitungsaufforderung mit der nächsthöheren Priorität in dieser Warteschlange nicht ausführen kann; und

Mittel für die Freigabe einer zurückgehaltenen Warteschlange, um zu gestatten, dass der Vorgang in Verbindung mit der Warteschlange die Ausführung seines ersten Programms für die Verarbeitungsaufforderung mit der nächsthöchsten Priorität in dieser Warteschlange fortsetzt.

**Revendications**

1. Système de gestion de processus pour exécuter des processus individuels, comprenant un système de traitement de données fonctionnant en temps réel et comportant un processeur (14), une mémoire (22) et des dispositifs d'entrée/sortie de processeur, ainsi que:

des moyens pour affecter des niveaux de priorité auxdits processus,

un répartiteur pour déterminer le processus dont la priorité est la plus élevée et qui est susceptible d'être exécuté, et pour lui affecter les ressources partagées du système,

des moyens pour engendrer, en réponse aux dispositifs d'entrée/sortie de processeur et audit processeur, un signal d'interruption auquel un niveau de priorité donné a été affecté,

des moyens pour affecter, en réponse audit signal d'interruption, des requêtes de travail aux processus,

caractérisé en ce qu'un premier processus est associé à une file d'attente (125) pour mettre dans une file d'attente les requêtes de travail (WR) mises dans un ordre déterminé en fonction de leur priorité par un second processus, lesdites requêtes de travail WR correspondant à une tâche qui devra être exécutée par ledit premier processus,

ledit premier processus dispose de moyens (122) pour sélectionner la requête de travail WR dont la priorité est la plus élevée dans la file d'attente en vue de son exécution lorsque ledit répartiteur aura sélectionné ledit premier processus,

ledit premier processus dispose de moyens (macro instruction ACALL) pour affecter une requête de travail WR à une seconde file d'attente sélectionnée associée à un troisième processus afin de programmer l'exécution asynchrone d'un travail par ledit troisième processus avec une priorité donnée,

ledit premier processus dispose de moyens (122) pour signaler l'achèvement d'un travail correspondant à une requête de travail WR.

2. Système de gestion de processus selon la revendication 1, caractérisé en ce que ledit premier processus est associé à un ensemble de files d'attente hiérarchisées (125) dont chacune possède une priorité implicite qui provoque l'exécution par ledit premier processus de toutes les requêtes de travail de la première file d'attente avant de sélectionner une requête de travail WR dans la file d'attente suivante.

3. Système de gestion de processus selon la revendication 2, caractérisé en ce qu'il comprend en outre:

une seule file d'attente de requêtes de travail affectées à une pluralité de processus, de telle sorte que la requête de travail qui, dans ladite file d'attente, a la priorité la plus élevée suivante soit prise en charge par le premier processus disponible faisant partie de ladite pluralité.

4. Système de gestion de processus selon les revendications 1, 2 ou 3, caractérisé en ce qu'il comprend en outre:

des moyens pour interrompre momentanement l'exécution par un processus d'une requête de travail suivante provenant de la file d'attente de requêtes de travail associée audit processus, et

des moyens pour permettre à un processus interrompu de poursuivre l'exécution d'une suite prédéterminée d'instructions pour la requête de travail qui a la priorité la plus élevée suivante dans sa file d'attente.

5. Système de gestion de processus selon les revendications 1, 2, 3 ou 4, caractérisé en ce qu'il comprend en outre:

des moyens pour interrompre momentanément une file d'attente afin d'empêcher le processus associé à celle-ci d'exécuter la requête de travail qui, dans cette file d'attente, a la priorité la plus élevée suivante, et

des moyens pour libérer une file d'attente précédemment interrompue afin de permettre su processus associé à celle-ci de poursuivre l'exécution de son programme principal pour la requête de travail qui, dans cette file d'attente, a la priorité la plus élevée suivante.

0 052 713

**FIG. 1**

- 28 SYSTEM CLOCK → CLOCK
- 18 INTERRUPT ARBITRATOR
- 14 PROCESSOR / INTERRUPT
- CLOCK
- 32
- CLOCK → DISKETTE DRIVE(S) 26
- CLOCK → OTHER DMA DEVICE(S) 29
- 30
- 24 25 LINE DISPLAY
- 20 MEMORY BUS
- 22 RANDOM ACCESS MEMORY → CLOCK
- 12, 36, 42
- KEYBOARD 10 — 16
- PRINTER 34 — 38
- OTHER PIO DEVICE(S) 40 — 44

**FIG. 2**

- CLOCK / CONTROL → PROGRAM COUNTER 58
- EXTERNAL CLOCK → CLOCK
- CONTROL / CLOCK → TEMPORARY SCRATCH REGISTER(S) 60
- CONTROL CLOCK → STATUS REG. 62
- CLOCK / CONTROL → DATA POINTER REGISTER 56
- BUS CONTROL LOGIC UNIT 64 → TO MEMORY BUS / 20
- CONTROL
- CONTROL / CLOCK → STACK POINTER REGISTER 54
- CLOCK
- TWO WAY DATA & ADDRESS BUS 48
- CLOCK / INTERRUPT → CONTROL LOGIC UNIT 46
- ARITHMETIC LOGIC UNIT 50
- PROGRAM I/O CONTROL 52 → CLOCK / CONTROL
- 53 INPUT/OUTPUT DATA BUS
- CLOCK

FIG. 3

INTERRUPT SERVICE ROUTINES

100

DISKETTE DRIVE PROCESSES 86    88

DISKETTE ADAPTER PROCESS 90

DISKETTE ISR

PRINTER ISR

TIMER ISR

KEYBOARD ISR 102

KEYBOARD

PROCESS CONTROL BLOCK 120

PROCESS DRIVER 122

124

DRIVE PROGRAM

WORK QUEUES

125a    125b

110

PROCESS CONTROL BLOCK 120

PROCESS DRIVER 122

124

ADAPTOR PROGRAM

WORK QUEUE 125

TO HARDWARE (DISKETTE)

112

104

106

FOREGROUND PROCESS

MESSAGE PROCESS 82

PROCESS CONTROL BLOCK 120

PROCESS DRIVER 122

124

APPLICATION PROGRAM

84

WORK QUEUE 125

108

PROCESS CONTROL BLOCK 120

PROCESS DRIVER 122

124

MESSAGE PROGRAM

WORK QUEUE 125

TO HARDWARE (DISPLAY)

0 052 713

FIG. 4

APPLICATION
PROGRAMS  124

SERVICE
ROUTINES

PROCESSES

LOAD
DELETE
INVOKE

SUSPEND
RELEASE

ACALL
DELREQ

PROCESS
DRIVER
122

PROCESS
CONTROL
BLOCK
120

QUEUES  125

WORK REQUEST

WORK REQUEST

WORK REQUEST

## FIG. 5

PROCESSES  130

PROCESS
DRIVER
120

PROCESS
CONTROL
BLOCK
122

PROCESSES  132

PROCESS
DRIVER
120

PROCESS
CONTROL
BLOCK
122

WORK
QUEUE

WORK REQUEST  125

WORK REQUEST

## FIG. 6

4

FIG.7

FIG. 8

FIG. 9

ACALL — 240

LOCATE PROCESS & QUEUE BEING ACALLED — 242

244
ACCESS BEING QUIESCED — YES

NO

246
PROCESS BEING DELETED — YES

NO

247
QUEUE FULL — YES

NO

248
SET ERROR RETURN CODE

252
CONSTRUCT WORK REQUEST

256
INSERT WORK REQUEST IN QUEUE

254
QUEUE EMPTY — YES

NO

258
QUEUE BEING HELD — YES

NO

266
GET IST ENTRY ON QUEUE

260
PROCESS DORMANT — NO

YES

268
W. R. PRIORITY > ENTRY — NO

272
GET NEXT QUEUE ENTRY

YES

270
INSERT WORK REQUEST IN QUEUE

262
WAKE UP PROCESS

264
SET NORMAL RETURN CODE

250
RETURN

FIG. 10

7